# EUROPÄISCHE PATENTSCHRIFT

(11) **EP 1 998 065 B1**
(45) Veröffentlichungstag und Bekanntmachung des Hinweises auf die Patenterteilung: **17.07.2013**
(21) Anmeldenummer: 08009346.1
(22) Anmeldetag: 21.05.2008
(51) Int. Cl.: F16D 48/06, F16D 13/40, F16D 25/0635, F16D 25/08, B60T 17/22

(54) **Kompressorkupplungssystem für eine Druckluftaufbereitungsanlage**
Compressor coupling system for a compressed air supply assembly
Système de couplage de compresseur pour une installation de traitement d'air comprimé

(30) Priorität: 01.06.2007 DE 102007025864; 11.01.2008 DE 102008003957
(43) Veröffentlichungstag der Anmeldung: 03.12.2008
(73) Patentinhaber: KNORR-BREMSE Systeme für Nutzfahrzeuge GmbH, 80809 München (DE)
(72) Erfinder: Hilberer, Eduard, 68766 Hockenheim (DE)
(74) Vertreter: Mattusch, Gundula

(56) Entgegenhaltungen:
- EP-A1- 0 122 015
- DE-A1- 3 521 731
- US-A- 3 893 556

## Beschreibung

Die Erfindung betrifft ein Kupplungssystem für einen Kompressor einer Druckluftaufbereitungsanlage, wobei das Kupplungssystem folgendes aufweist: Ein Kupplungsgehäuse, eine Kupplungsscheibe zum Übertragen eines Drehmomentes einer Antriebsseite auf eine Druckplatte einer Abtriebsseite, einen Ausrückkolben zum pneumatischen Ausrücken der Kupplung, eine Kupplungsfeder zum Anpressen der Kupplungsscheibe an die Druckplatte, ein elektrisch betätigbares Kupplungsschaltventil zum Belüften eines dem Ausrückkolben zugeordneten Arbeitsvolumens, ein elektronisches Steuergerät zur Steuerung der Kupplung in Abhängigkeit von verschiedenen Systemparametern und ein Ausrücklager zur Lagerung einer Antriebswelle und zur Übertragung der von dem Ausrückkolben auf die Kupplungsscheibe in axialer Richtung ausgeübten Kraft.

Die Erfindung betrifft weiterhin ein Verfahren zur Steuerung eines Kupplungssystems für einen Kompressor einer Druckluftaufbereitungsanlage, wobei das Kupplungssystem folgendes aufweist: Ein Kupplungsgehäuse, eine Kupplungsscheibe zum Übertragen eines Drehmomentes einer Antriebsseite auf eine Druckplatte einer Abtriebsseite, einen Ausrückkolben zum pneumatischen Ausrücken der Kupplung, eine Kupplungsfeder zum Anpressen der Kupplungsscheibe an die Druckplatte, ein elektrisch betätigbares Kupplungsschaltventil zum Belüften eines dem Ausrückkolben zugeordneten Arbeitsvolumens, ein elektronisches Steuergerät zur Steuerung der Kupplung in Abhängigkeit von verschiedenen Systemparametern und ein Ausrücklager zur Lagerung einer Antriebswelle und zur Übertragung der von dem Ausrückkolben auf die Kupplungsscheibe in axialer Richtung ausgeübten Kraft.

Moderne Nutzfahrzeuge besitzen üblicherweise eine Druckluftversorgungsanlage, die gereinigte und getrocknete Druckluft für verschiedene Systeme des Nutzfahrzeugs bereitstellt. Beispielsweise werden die Betriebsbremsen und eine eventuell vorhandene Luftfederung des Nutzfahrzeugs von der Druckluftaufbereitungsanlage versorgt. In die Druckluftaufbereitungsanlage kann ein Steuergerät zum ansteuern der elektrischen Magnetventile und dem Auswerten der Sensorsignale integriert sein. Die Magnetventile können alternativ auch von einem externen Steuergerät entsprechend verschiedener Systemparameter angesteuert werden. Derartige Steuergeräte erhalten weitere Systemparameter über einen seriellen Kommunikationsanschluss, zum Beispiel den CAN-Bus. Beispielsweise können Daten der Betriebsbremse und einer eventuell vorhandenen Luftfederung der Druckluftaufbereitungsanlage übermittelt werden. Die Druckluftaufbereitungsanlage selbst erhält die noch nicht gereinigte und getrocknete Druckluft von einem angeschlossenen Kompressor. Die Energie zum Betreiben des Kompressors kann in einfacher Weise über eine Welle vom Antriebsmotor des Nutzfahrzeugs zum Kompressor übertragen werden.

Da der Bedarf an Druckluft innerhalb des Nutzfahrzeugs normalerweise keinen Dauerbetrieb des Kompressors erfordert, kann eine Kupplung zwischen dem Antriebsmotor und dem Kompressor vorgesehen sein, um eine Entkopplung von Kompressor und Antrieb zu ermöglichen. Dies ist wünschenswert, da der Betrieb des Kompressors Energie verbraucht, die eingespart werden kann, wenn keine Druckluft benötigt wird beziehungsweise wenn der vorhandene Druckluftvorrat den Druckluftbedarf der Verbraucher einige Zeit decken kann.

Die Leerlaufphasen während derer Energie im ausgekuppelten Zustand des Kompressors eingespart werden kann, sind im Autobahnverkehr sehr lange, da dann der Druckluftverbrauch insbesondere durch die Betriebsbremse niedrig ist.
Im Gegensatz hierzu sind die Leerlaufphasen im Stadtverkehr aufgrund der großen Luftentnahmen sehr kurz und es gibt viele Lastwechsel bei denen die Kupplung geschaltet wird. Intelligente Druckluftaufbereitungsanlagen können im Stadtverkehr die Schaltverluste optimieren und dadurch die Gesamtbelastung der Kupplung reduzieren. Insbesondere beherrschen sie eine Optimierung des Regenerationsverfahrens und eine Nutzung passiver Schubphasen. Bei einer passiven Schubphasennutzung wird in einer Förderphase auf einen höheren Druck gefördert, falls das Nutzfahrzeug ein positives Schubmoment aufweist. Typisches Merkmal hierfür ist eine aktive Dauerbremse bestehend aus Motorbremse und eventuell aktiven Retarderbremsen. Aktive Schubphasen werden hingegen softwaretechnisch unterdrückt, da sie die Belastung der Kupplung verdoppeln würden und daher eine zerstörerische Wirkung auf Kupplungen gemäß dem Stand der Technik haben und somit die Lebensdauer dieser Systeme reduzieren würden.

Die Abmessungen der verbauten Komponenten sollen weiterhin möglichst gering gehalten werden, was zu einer Verkleinerung einzelner Bauelemente, wie zum Beispiel Ventilen und Vorratsbehältern, führt. Des Weiteren steigt die benötigte Druckhöhe infolge der kleiner werdenden Aktuatoren immer weiter an. Um den Druckbedarf und den Druckluftbedarf der Verbraucher zu befriedigen, werden Hochleistungs- beziehungsweise Hochdruckkompressoren mit zunehmendem Übersetzungsverhältnis, das heißt steigender Umdrehungszahl, in das Nutzfahrzeug integriert. Dadurch wird die Kupplung ebenfalls stärker belastet, da sie immer größere Kräfte auf den Kompressor übertragen muss.

Gattungsgemäße Kupplungen besitzen üblicherweise zwei Schaltzustände. Im geöffneten ausgerückten Zustand hebt der Ausrückkolben die Kupplungsscheibe von der Druckplatte ab, wobei die Lage aller Bestandteile der Kupplung eindeutig bestimmt ist. Im geschlossenen Zustand drückt die Kupplungsfeder die Kupplungsscheibe an die Druckplatte und der Ausrückkolben ist entlüftet. Die genaue Lage des Ausrückkolbens ist in eingerückten Zustand nur bis auf ein so genanntes Ausrücklagerspiel bekannt, welches eine axiale Bewegung des Ausrückkolbens ermöglicht ohne dass die Kupplung öffnet. Das Lagerspiel in der Kompressorkupplung erhöht jedoch die Schaltzeit der Kupplung und zerstört vor allem bei häufigen Lastwechseln das Ausrücksystem. Desweiteren unterliegen diese Kupplungen durch ihre reine pneumatische Ansteuerung einer erhöhten Belastung.

Ein Kupplungssystem mit einem Ausrückolben zum pneumatischen Ausrücken der Kupplung, und ein elektrisch betätigbares Kupplungsschaltventil, ist aus Dokument DE 3521731, das als nächstliegender Stand der Technik angesehen wird, offenbart.

Der Erfindung liegt die Aufgabe zugrunde, das Ausrücklagerspiel durch einfache mechanische Elemente zu unterdrücken, um die Lebensdauer der Kupplung trotz häufiger Schaltvorgänge zu erhöhen und so energiesparende Betriebsarten von Kompressor und Druckluftversorgungseinrichtung bei großem Luftverbrauch zu ermöglichen.

Diese Aufgabe wird durch die Merkmale der unabhängigen Ansprüche gelöst.

Vorteilhafte Ausgestaltungen und Weiterbildungen der Erfindungen ergeben sich aus den abhängigen Ansprüchen.

Die Erfindung baut auf dem gattungsgemäßen Kupplungssystem dadurch auf, dass die Kupplungsfeder das Ausrücklager im eingerückten Zustand der Kupplung gegen einen gehäuseseitigen Anschlag drückt und so ein Ausrücklagerspiel verhindert. Die Kupplungsfeder drückt nicht nur die Kupplungsscheibe an die Druckplatte. Sie überträgt über die Kupplungsmechanik, die der Ausrückkolben verwendet, um die Kupplungsscheibe auszurücken, Kraft auf den Ausrückkolben. Bei geeigneter Dimensionierung der Feder kann sie den Ausrückkolben gegen einen gehäuseseitigen Anschlag drücken und so in einer spielfreien Position fixieren.

Alternativ kann die Erfindung auf der gattungsgemäßen Kupplung dadurch aufbauen, dass mindestens eine Kompensationsfeder vorgesehen ist, die im eingerückten Zustand der Kupplung ein Anschlagen des Ausrücklagers am Kupplungsgehäuse verhindert. Wenn anstelle eines gehäuseseitigen Anschlags mindestens eine Kompensationsfeder vorgesehen ist, so kann auch dies im eingerückten Zustand der Kupplung zu einer spielfreien Fixierung des Ausrückkolbens verwendet werden. Der Ausrückkolben wird dabei von der mindestens einen Kompensationsfeder und der Kupplungsfeder gehalten, wobei sich die Federkräfte gerade kompensieren. Die Vermeidung des Ausrücklagerspiels senkt die nötige Schaltzeit der Kupplung, was unter anderem einem geringeren Verschleiß der Kupplungsscheibe verursacht. Weiterhin wird das Ausrücklager bei jedem Schaltvorgang der Kupplung weniger stark beansprucht, wodurch ein frühzeitiger Ausfall der Kupplung durch ein ausgeschlagenes Ausrücklager vermieden wird. Durch die verbesserte Standfestigkeit der Kupplung werden neue energiesparende Betriebsarten für die Druckluftversorgungseinrichtung und den Kompressor möglich, die bisher wegen der auftretenden zusätzlichen Kupplungsbelastung nicht realisierbar waren.

Nützlicherweise kann vorgesehen sein, dass im Bereich zwischen Gehäuseanschlag und Ausrücklager eine aus mindestens einer Nase und mindestens einer entsprechenden Ausnehmung bestehende Führung angeordnet ist, die eine Drehung des Ausrückkolbens um die Antriebsachse verhindert, wobei die mindestens eine Nase im ein- und im ausgerückten Zustand zumindest teilweise in der Ausnehmung verbleibt. Diese Verdrehsicherung des Ausrückkolbens vermeidet insbesondere bei schwergängigem oder abgenütztem Ausrücklager eine Drehbewegung des Ausrückkolbens, die die Abdichtung zwischen Kolben und Kupplungsgehäuse verschleißen würde, während die axiale Bewegung von Ausrückkolben und Ausrücklager nicht beeinflusst wird. Die Verdrehsicherung erhöht also die Lastwechselanzahl, die das Kupplungssystem schadfrei übersteht.

Ebenfalls kann vorgesehen sein, dass das Kupplungsschaltventil redundant von zwei unabhängigen Vorwärtsbehältern der Betriebsbremskreise versorgt wird. Durch die redundante Versorgung des Kupplungsschaltventils ist im Defektfall eines der beiden Betriebsbremskreise der Betrieb der Kupplung möglich. Dies ist vorteilhaft, da die Bremsleistung eines Betriebsbremskreises üblicherweise die notwendige Hilfsbremsleistung erbringen kann und bis zur Reparatur des defekten Betriebsbremskreises keine weiteren Funktionsbeschränkungen der Kupplung notwendig sind. Die Schaltventile der Druckluftversorgungseinrichtung können dabei vorteilhafterweise auch redundant aus einem der den Rückschlagventilen abströmseitig nachgeordneten Behältern versorgt werden.

Nützlicherweise kann vorgesehen sein, dass der zum Öffnen oder Schließen der Kupplung geforderte Systemdruck mit einem einem Überströmventil nachgeordneten Drucksensor gemessen wird. Die Verwendung eines einem Überstromventil nachgeordneten Drucksensors vermeidet Einflüsse des Kompressors, wie Druckspitzen die während der Förderung vor den Überströmventilen auftreten können und vermeidet so eine versehentliche Beendigung der Förderphase.

Vorteilhafterweise kann vorgesehen sein, dass das Steuergerät eine Umgebungstemperatur mit einem Temperatursensor misst oder eine Umgebungstemperatur an das Steuergerät übertragen wird. Die Temperaturinformation kann als Indikator für die Gefahr des Einfrierens der Förderleitung verwendet werden. Sollte die Förderleitung einfrieren, so fördert der Kompressor gegen einen zu hohen Druck weshalb die Kupplung schleift.

Insbesondere kann vorgesehen sein, dass das Kupplungssystem in einem Nutzfahrzeug zusammen mit einem Kompressor und einer Druckluftversorgungseinrichtung, die einen Energiespar- und Kupplungsüberwachungsbetrieb ermöglicht angeordnet ist.

Die Erfindung baut auf dem gattungsgemäßen Verfahren dadurch auf, dass die Kupplungsfeder das Ausrücklager im eingerückten Zustand der Kupplung gegen einen gehäuseseitigen Anschlag drückt und so ein Ausrücklagerspiel verhindert oder mindestens eine Kompensationsfeder vorgesehen ist, die im eingerückten Zustand der Kupplung ein Anschlagen des Ausrücklagers am Kupplungsgehäuse verhindert und dass das elektronische Steuergerät elektrisch betätigbare das Kupplungsschaltventil schaltet, wodurch die Kupplung verschleißarm öffnet oder schließt, und den Status der Kupplung anderen Steuergeräten mitteilt, wobei mindestens einer der folgenden Systemparameter berücksichtigt ist:
- A: Umgebungstemperatur
- B: Fahrzeuggeschwindigkeit
- C: Motordrehmoment
- D: GPS-/Satellitendaten
- E: Motor-/Retarderstatus
- F: Gaspedalstatus
- G: Verbraucherstatus
- H: Bremsen-/Niveauregelungsinfo
- I: Getriebestatus
- J: Fahrzeugkupplungsstatus
- K: Status der Zündung
- L: Motorstatus/Drehzahlnachfrage.
- M: Onboardingdiagnosedaten
- N: Offboardingdiagnosedaten
- O: Statusluftversorgungssystem

Die Vorteile und Besonderheiten des erfindungsgemäßen Verfahrens werden im Zusammenhang mit der Figurenbeschreibung explizit angegeben.

Die Erfindung wird nun mit Bezug auf die begleitenden Zeichnungen anhand besonders bevorzugter Ausführungsformen beispielhaft erläutert.

Es zeigen:
- Figur 1: eine erfindungsgemäße Kupplung zwischen einem Motor und einem Kompressor sowie das zugehörige Motorsteuergerät;
- Figur 2: ein Schaltbild einer Druckluftversorgungseinrichtung mit synchroner Ansteuerung eines Ablassventils und eines Regenerationsventils zusammen mit der in Figur 1 dargestellten Baugruppe;
- Figur 3: ein Schaltbild einer Druckluftversorgungseinrichtung mit unabhängig voneinander ansteuerbaren Ablass- und Regenerationsventilen zusammen mit der in Figur 1 dargestellten Baugruppe;
- Figur 4: ein Schaltbild einer Druckluftversorgungseinrichtung mit einem unabhängig ansteuerbaren TCO-Ventil in einer Förderleitung zusammen mit der in Figur 1 dargestellten Baugruppe;
- Figur 5: ein Schaltbild einer Druckluftversorgungseinrichtung mit einem pneumatisch ansteuerbaren ESS-Boosterventil zusammen mit der in Figur 1 dargestellten Baugruppe;
- Figur 6: ein Schaltbild einer Druckluftversorgungseinrichtung, wobei der Betriebsbremsdruck begrenzt ist zusammen mit der in Figur 1 dargestellten Baugruppe und
- Figur 7: eine Druckluftversorgungseinrichtung mit einer Prioritätsschaltung zusammen mit der in Figur 1 dargestellten Baugruppe.

Bei der nachfolgenden Beschreibung der Zeichnungen bezeichnen gleiche Bezugszeichen gleiche oder vergleichbare Komponenten.

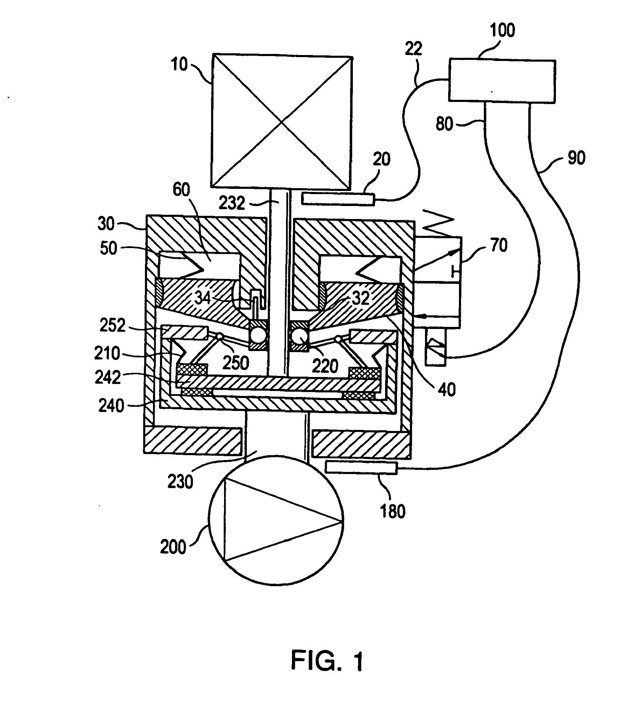

Figur 1 zeigt eine erfindungsgemäße Kupplung zwischen einem Motor 10 und einem Kompressor 200 zusammen mit einem Motorsteuergerät 100 an welchem über elektrische Anschlussleitungen 22, 90 zwei Drehzahlsensoren 20, 180 angeschlossen sind. Die Kupplung umfasst ein Kupplungsgehäuse 30, eine Kupplungsscheibe 242, eine Druckplatte 240, eine Kupplungsfeder 210, eine Kupplungsmechanik 250, einen Kupplungsdeckel 252, ein Ausrücklager 220, das üblicherweise ein Wälzlager mit einem sich drehenden Lagerring und einem stehenden Lagerring ist, der mit einem Ausrückkolben 40 gekoppelt ist, eine Führung 34, ein an dem Kupplungsgehäuse 30 angeordnetes elektrisch betätigbares Kupplungsschaltventil 70, ein Arbeitsvolumen 60 und eine in dem Arbeitsvolumen 60 angeordnete Kompensationsfeder 50. Weiterhin ragt eine starr mit der Kupplungsscheibe 242 verbundene Antriebswelle 232 vom Motor und eine starr mit der Druckplatte 240 verbundene Abtriebswelle 230 vom Kompressor 200 in das Kupplungsgehäuse 30 hinein. Das Kupplungsgehäuse 30 kann auch zumindest teilweise in das Kompressorgehäuse integriert sein. Das Ausrücklager 220 umfasst optional noch ein Zwischenelement bzw. eine Zwischenscheibe zwischen dem stehenden Lagerring und dem Ausrückkolben 40 und bildet gemeinsam mit dem Ausrückkolben ein so genanntes Ausrücksystem, das axial verschiebbar ist.

Die dargestellte Kupplung kann zwei definierte Zustände annehmen, nämlich ein- oder ausgerückt beziehungsweise geschlossen oder geöffnet. Das Motorsteuergerät 100 kann über eine elektrische Leitung 80 das elektrisch geschaltete Kupplungsschaltventil 70 steuern und so die Kupplung zwischen beiden Zuständen überführen. In Figur 1 dargestellt ist der eingerückte Zustand, wobei das Arbeitsvolumen 60 des Ausrückkolbens 40 entlüftet ist. In diesem Zustand übt der Ausrückkolben 40 über das Ausrücklager 220 und die Kupplungsmechanik 250 keine Kraft auf die Kupplungsscheibe 242 aus, die von der Kupplungsfeder 210 reibschlüssig gegen die Druckplatte 240 gepresst wird. Dadurch wird ein vom Motor 10 über die Antriebswelle 232 auf die Kupplungsscheibe 242 übertragenes Drehmoment von der Druckplatte 240 aufgenommen und über die Abtriebswelle 230 an den Kompressor 200 übertragen. Das Kupplungsschaltventil 70 ist vorteilhafterweise direkt an dem Kupplungsgehäuse 30 angeordnet, um bei auftreten einer kurzen Schubphase diese durch ein schnelles entlüften des Arbeitsvolumens 60 auch nutzen zu können. Die Anordnung des elektrischen Kupplungsschaltventils 70 am Kupplungsgehäuse senkt also die Schaltzeit der Kupplung. Darüber hinaus sinkt durch diese Positionierung die Wahrscheinlichkeit einer Leckage, da die Leitung zwischen Kupplungsschaltventil 70 und Arbeitsvolumen 60 reduziert wird. Das Kupplungsgehäuse 30 ist außerdem kühler als der Zylinderkopf des Kompressors 200. Das Kupplungsgehäuse kann auch zur besseren Wärmeabfuhr das Kurbelgehäuse des Kompressors 200 sein. Die Verwendung eines eletrisch betätigbaren Kupplungsschaltventils 70 ermöglicht durch seine schnelle Schaltzeit erst die kupplungsschonenden energiesparenden Betriebsarten und Sicherheitsfunktionen, die im weiteren noch näher beschrieben werden.

Soll die Kupplung geöffnet werden, so bestromt das Motorsteuergerät 100 das Kupplungsschaltventil 70 und über eine nicht dargestellte Druckversorgungsleitung wird das Arbeitsvolumen 60 des Arbeitskolbens 40 mit Druck beaufschlagt. Dadurch wird der Arbeitskolben 40 zusammen mit dem Ausrücklager 220 in axialer Richtung entlang der Antriebswelle 232 auf die Kupplungsscheibe 242 zubewegt. Die Kupplungsmechanik 250 lenkt die entstehenden Kräfte um und die Kupplungsscheibe 242 wird gegen die Anpresskraft der Kupplungsfeder 210 ausgerückt. Der Kontakt zwischen Kupplungsscheibe 242 und Druckplatte 240 endet und das vom Motor 10 aufgebrachte Drehmoment wird nicht mehr an den Kompressor 200 übertragen. Vorteilhafterweise ist der Druck, der zum Ausrücken des Kupplungssystems benötigt wird, geringer als der Abschaltdruck, um die Bauteile, z.B. die Dichtung zwischen Ausrückkolben und Kompressor, zu schonen.

Wird die Kupplung wieder geschlossen, das heißt das Arbeitsvolumen 60 entlüftet, so wird der Ausrückkolben 40 von der Kupplungsfeder 210 über die Kupplungsmechanik 250 und das Ausrücklager 220 beim Anpressen der Kupplungsscheibe 242 auf die Druckplatte 240 gleichzeitig in axialer Richtung der Antriebswelle 232 von der Kupplungsscheibe weggedrückt. A priori ist dabei nicht festgelegt, wann genau und in welcher axialen Position der Ausrückkolben 40 zur Ruhe kommt. Diese Unbestimmtheit der axialen Position des Ausrückkolbens 40 im eingerückten Zustand der Kupplung wird auch als Axiallagerspiel bezeichnet. Insbesondere kann sich der Ausrückkolben 40 im eingerückten Zustand der Kupplung durch das Axiallagerspiel bewegen und so einen erhöhten Verschleiß verursachen. Das Axiallagerspiel kann durch zwei verschiedene in Figur 1 dargestellte mechanische Vorrichtungen unabhängig voneinander verhindert werden.
1. Das Kupplungsgehäuse 30 kann in seinem Inneren so bemessen sein, dass die Kupplungsfeder 210 beim Einrücken der Kupplung den Ausrückkolben 40 gegen einen Gehäuseanschlag 32 drückt während gleichzeitig noch eine Restspannung auf der Kupplungsfeder 210 vorliegt. Der Ausrückkolben 40 wird so im eingerückten Zustand der Kupplung gegen den Gehäuseanschlag 32 verspannt und ein Ausrücklagerspiel wirksam verhindert.
2. Im Inneren des Arbeitsvolumens 60 des Ausrückkolbens 40 kann mindestens eine Kompensationsfeder 50 angeordnet sein, die auch im entlüfteten Zustand des Arbeitsvolumens 60 eine Kraft auf den Ausrückkolben 40 ausübt und ihn auf diese Weise vorspannt. Beim Einrücken der Kupplung wird nun die Kupplungsfeder 210 den Ausrückkolben 40 wieder über die Kupplungsmechanik 250 und das Ausrücklager 220 von der Kupplungsscheibe wegdrücken, wobei jetzt die mindestens eine Kompensationsfeder 50 den Ausrückkolben 40 zur Kupplungsscheibe 242 zurückdrückt. Der Ausrückkolben 40 wird folglich an einem definierten Punkt des Kräftegleichgewichts zwischen der mindestens einen Kompensationsfeder 50 und der Kupplungsfeder 210 zur Ruhe kommen. Diese Ruhelage des Ausrückkolbens 40 kann durch Anpassen der Federstärken relativ frei gewählt werden, insbesondere kann ein Anschlagen des Ausrückkolbens 40 an dem Kupplungsgehäuse 30 vollständig vermieden werden.

Weiterhin ist eine Führung 34, bestehend aus einer Nase und einer Ausnehmung zwischen dem Ausrücklager 220 und dem Gehäuseanschlag 32, dargestellt. Diese Führung lässt nur eine axiale Bewegung des Ausrückkolbens 40 zu, vermeidet also insbesondere eine die Abdichtung zwischen Ausrückkolben 40 und Kupplungsgehäuse 30 verschleißende Drehbewegung des Ausrückkolbens 40 die auf Dauer eine Leckage des Arbeitsvolumens 60 zur Folge hätte. Beispielsweise kann die Nase der Führung 34 in axialer Richtung an dem Ausrücklager 220 von der Kupplungsscheibe wegweisend angeordnet sein und von der im Bereich des Gehäuseanschlags 32 in dem Kupplungsgehäuse 30 vorgesehene entsprechende Ausnehmung aufgenommen werden. Nase und Ausnehmung sind dabei derart aufeinander abgestimmt, dass die Nase im geöffneten und im geschlossenen Zustand der Kupplung zumindest teilweise in der Ausnehmung verbleibt. Ist mehr als eine Nase vorhanden, so können die Nasen und die zugehörigen Ausnehmungen gleichmäßig um das Ausrücklager 220 verteilt werden. Es ist ebenfalls möglich die Nase oder die Nasen an dem Gehäuse 30 anzubringen und die zugehörigen Ausnehmungen an einem der axial beweglichen Ausrückelemente, d.h. Ausrücklager 220 oder Ausrückkolben 40, anzuordnen.

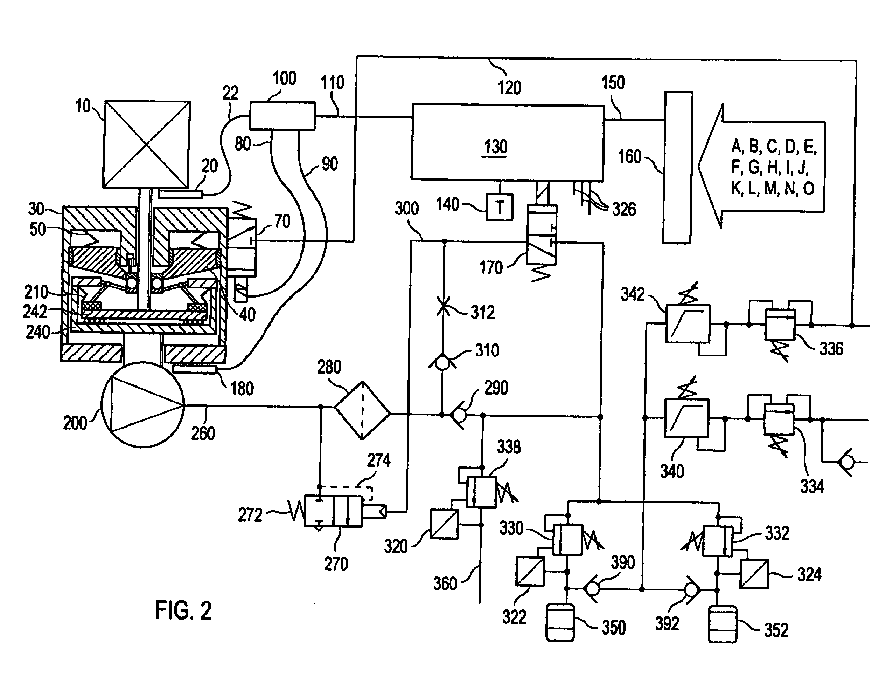

Die Figuren 2 bis 7 zeigen jeweils eine Druckluftversorgungseinrichtung in verschiedenen Ausführungsformen zusammen mit der in Figur 1 beschriebenen Baugruppe aus Motor 10, Kompressor 200 und Kupplung. Die Druckluftversorgungseinrichtung umfasst ein Steuergerät 130 das mit dem Motorsteuergerät 100 über eine serielle Leitung 110 verbunden ist, einen Datenfilter 160 der die vom CAN-Bus erhaltenen Daten über einen Datenbus 150 an das Steuergerät 130 gefiltert überträgt, einen Temperatursensor 140, ein Mehrkreisschutzventil zur abgesicherten Versorgung mehrerer Verbraucherkreise bestehend aus Überströmventilen 330, 332, 334, 336, 338, 340, 342 und 344, Drucksensoren 320, 322 und 324, Vorratsbehältern 350, 352 und Rückschlagventilen 390, 392. Weiterhin umfasst die Druckluftversorgungseinrichtung mehrere Magnetventile, eine Luftfilterpatrone 280, mehrere Rückschlagventile sowie eine Drossel 312, wobei die genaue Anordnung beziehungsweise Anzahl je nach Ausführungsform verschieden sein kann. Das Motorsteuergerät 100 kann alternativ auch in das Steuergerät 130 der Druckluftversorgungseinrichtung integriert sein, was die serielle Leitung 110 einspart. Deshalb wird die Unterscheidung zwischen Motorsteuergerät 100 und Steuergerät 130 zum Schalten des Kupplungsschaltventils 70 nicht immer getroffen.

Die in Figur 2 dargestellte Ausführungsform weist ein Rückschlagventil 290 auf, das ein Rückströmen der gereinigten und getrockneten Luft durch die Förderpatrone 280 verhindert. Zur Steuerung der Regeneration der Förderpatrone ist ein Magnetventil 170 als Regenerationsventil vorgesehen, das von dem Steuergerät 130 geschaltet wird und das eine Umgehung des Rückschlagventils 290 ermöglicht, wobei eine Drossel 312 und ein weiteres Rückschlagventil 310 in der Umgehung vorgesehen ist. Weiterhin wird über eine pneumatische Steuerleitung 300 bei dem Schalten des Magnetventils 170 ein Ablassventil 270 synchron angesteuert. Das Ablassventil 270 wird im drucklosen Zustand von einer Feder 272 geschlossen und kann durch die Vorsteuerleitung 274 auch als Überdruckschutz der Förderleitung 260 wirken. Die Schaltventile 170 und 172 können dabei vorteilhafterweise auch redundant aus einer den Rückschlagventilen 390, 392 ausgangsseitig nachgeordneten Leitung versorgt werden.

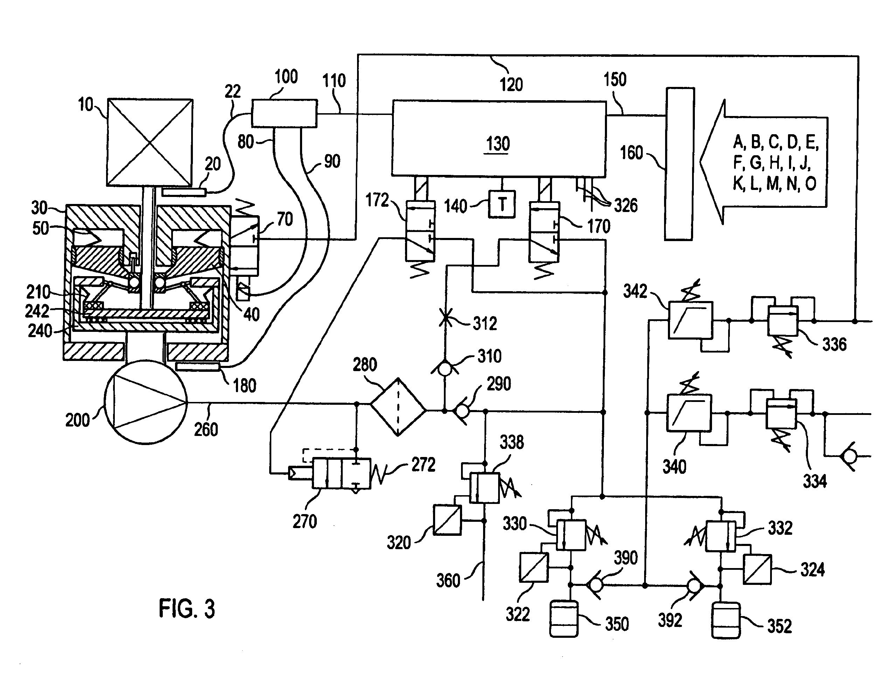

Die in Figur 3 dargestellte Ausführungsform der Druckluftaufbereitungsanlage umfasst ein weiteres Magnetventil 172, das von dem Steuergerät 130 geschaltet wird und das Ablassventil 270 über eine pneumatische Steuerleitung 300 schaltet. Das Ablassventil 270 und das Regenerationsventil 170 können in dieser Ausführungsform unabhängig voneinander geschaltet werden.

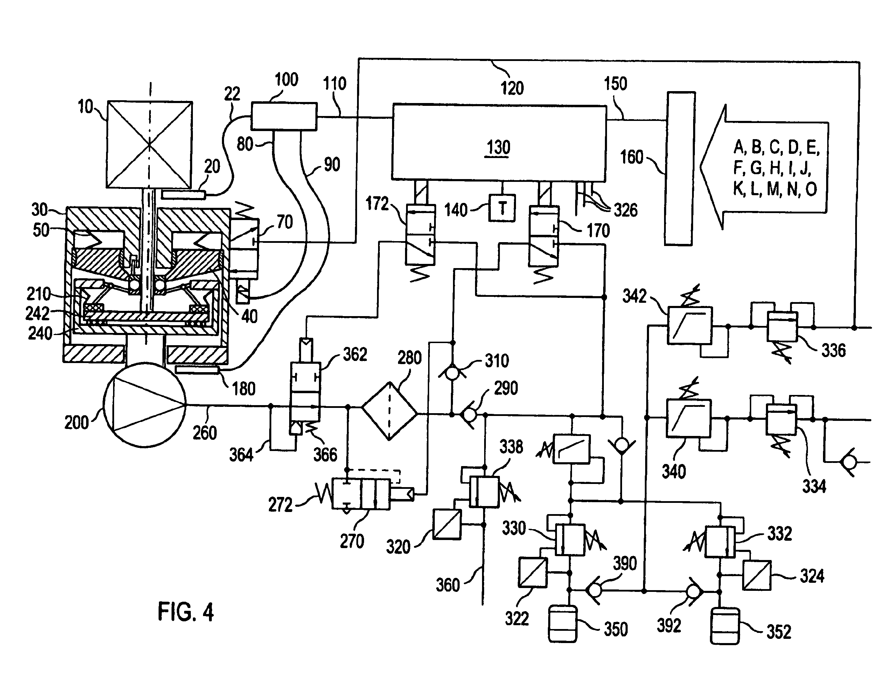

Figur 4 umfasst neben den bereits erwähnten Ventilen ein sogenanntes TCO-Ventil 362. Im Gegensatz zu der in Figur 3 dargestellten Ausführungsform der Druckluftaufbereitungsanlage steuert nun das Magnetventil 172 das TCO-Ventil 372, das in der Lage ist die Förderleitung 260 zu sperren. Im drucklosen Zustand wird das TCO-Ventil 362 von einer Feder 366 offen gehalten. In der dargestellten Ausführungsform wird das Ablassventil 270, analog zu Figur 2, synchron mit dem Regenerationsventil 170 geschaltet. Wird gleichzeitig mit dem Einleiten des Regenerationszyklus der Luftfilterpatrone 280 das TCO-Ventil 362 geschlossen, so kann der Druck in der Förderleitung 260 erhalten werden und weniger Druckluft geht verloren. Nützlicherweise wird gleichzeitig mit dem Verschließen des TCO-Ventils 362 auch der Kompressor 200 ausgekuppelt und/oder entlastet, da keine Förderung von Druckluft stattfinden kann. Um ein Platzen der Förderleitung 260 durch ein eventuelles Nachlaufen des Kompressors 200 nach Öffnen der Kupplung zu verhindern, wirkt das TCO-Ventil 362 durch eine Vorsteuerleitung 364 auch als Überdruckventil für die geschlossene Förderleitung 260.

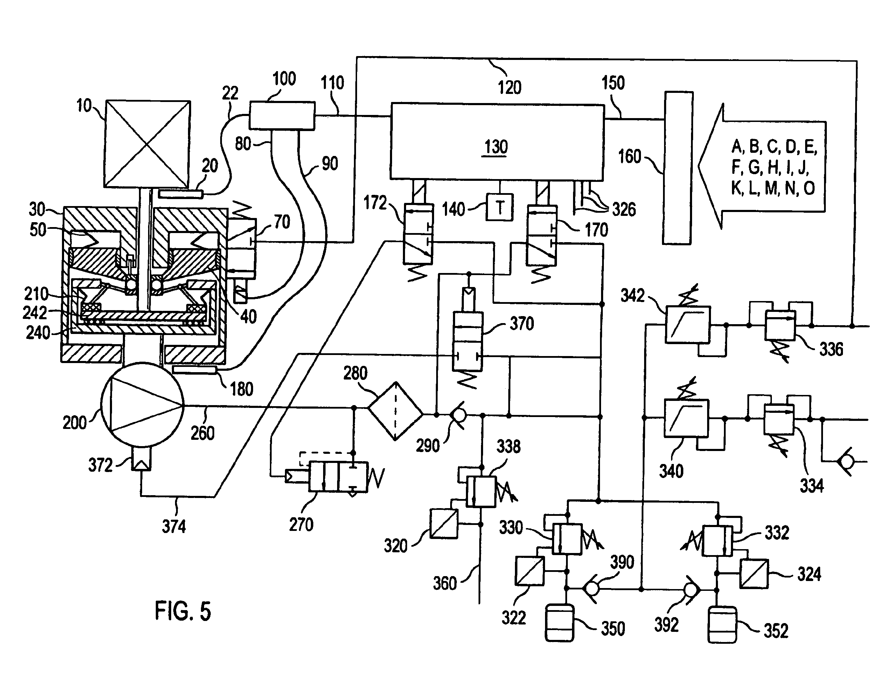

Figur 5 zeigt eine weitere Ausführungsform einer Druckluftversorgungseinrichtung die zunächst identisch mit der in Figur 3 gezeigten Ausführungsform ist. Jedoch ist in dem Regenerationspfad keine Drossel und kein Rückschlagventil vorgesehen. Stattdessen steuert das Magnetventil 170 ein weiteres Magnetventil 370 an, welches über eine Steuerleitung 374 ein so genanntes ESS-Boosterventil 372 zur Entlastung des Kompressors 200 ansteuert. In dieser Ausführungsform soll außerdem während eines kurzen Regenerationszyklus eine große Luftmenge durch die Lufttrocknerpatrone 280 geleitet werden können. Bei einer massiven aktiven Schubphasensammlung sollte ein ESS-Schaltsystem mit einem 2/2-Wege Boosterventil in dem Kompressor 200 implementiert sein, um die erforderlichen kurzen Ansprechzeiten des Energiesparsystems zu erreichen

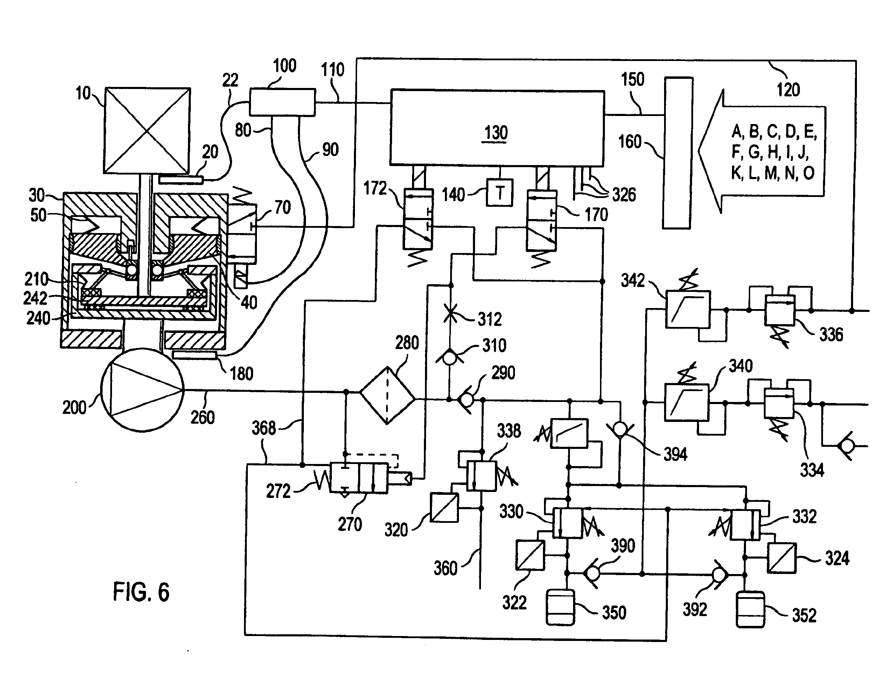

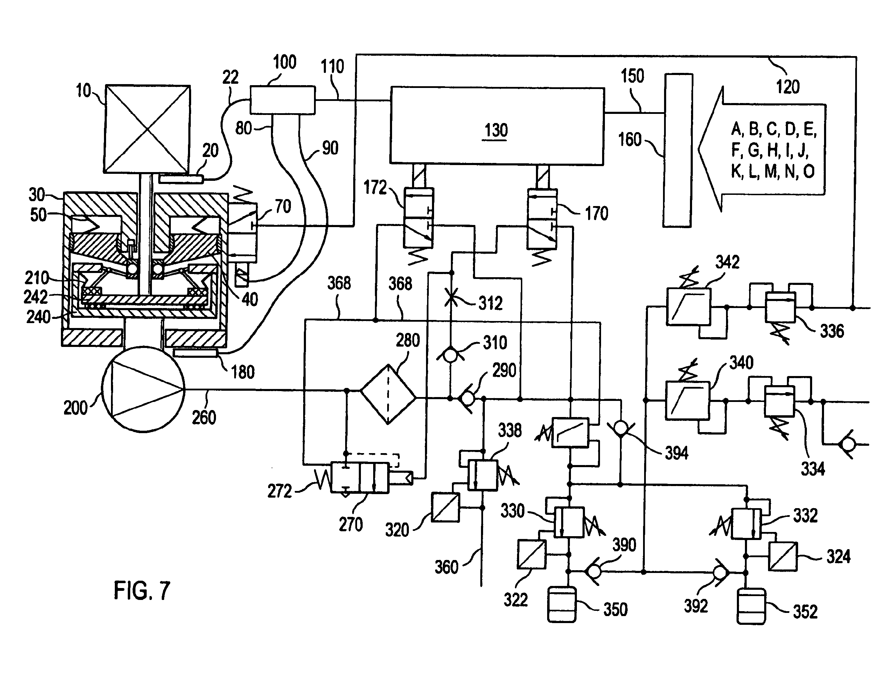

Die Figuren 6 und 7 zeigen Ausführungsformen einer Druckluftaufbereitungsanlage, die wieder weitgehend mit der in Figur 3 dargestellten Ausführungsform identisch sind. Im Gegensatz zu der in Figur 3 dargestellten Ausführungsform wird das Ablassventil 270 jedoch synchron mit dem Magnetventil 170 geschaltet. Allerdings ist in den Figuren 6 und 7 eine Steuerleitung 368 dargestellt, die das Ablassventil 270 ansteuert und auf zwei unterschiedliche Arten einer Druckbegrenzung bzw. eine Prioritätsschaltung realisiert.

Alle dargestellten Ausführungsformen einer Druckluftaufbereitungsanlage erhalten über den CAN-Bus folgende Informationen beziehungsweise Signale:
A: Umgebungstemperatur
B: Fahrzeuggeschwindigkeit
C: Motordrehmoment
D: GPS-/Satellitendaten
E: Motor-/Retarderstatus
F: Gaspedalstatus
G: Verbraucherstatus
H: Bremsen-/Niveauregelungsinfo
I: Getriebestatus
J: Fahrzeugkupplungsstatus
K: Status der Zündung
L: Motorstatus/Drehzahlnachfrage.
M: Onboardingdiagnosedaten
N: Offboardingdiagnosedaten
O: Statusluftversorgungssystem

Die empfangenen Daten werden durch den Datenfilter 160 gefiltert und über den Datenbus 150 an das Steuergerät 130 übertragen, um anhand der empfangenen und ermittelten Daten den weiteren Betrieb der Druckluftversorgungseinrichtung und der Kupplung zu regeln.

Im Folgenden werden einige Verfahren zur Steuerung der Kupplung und der Druckluftversorgungseinrichtung erläutert. Dabei werden jeweils ausgehend von den verwendeten Eingangsgrößen die Schlussfolgerung und die daraus resultierenden Aktionen angegeben. Die angegebenen Verfahren sind insbesondere geeignet, einen energiesparenden und verschleißarmen Betrieb der Kupplung zu ermöglichen und gleichzeitig im Defektfall noch Notlaufeigenschaften zu gewährleisten.

Ein Verfahren für die normale Kupplungsöffnungsfunktion umfasst folgende Eingangsgrößen:
- L, der Motor 10 läuft;
- K, die Zündung ist eingeschaltet;
- M, es ist kein Systemfehler detektiert, welcher ein Öffnen der Kupplung verbietet;
- O, der Abschaltdruck, gemessen durch Drucksensoren der Druckluftversorgungseinrichtung, ist erreicht;
- N, Werkstatt- beziehungsweise Diagnose Betriebsart ist nicht aktiv.

Ausgehend von den genannten Eingangsgrößen kann davon ausgegangen werden, dass der Druck ansteigen wird, beziehungsweise es wird ein steigender Druckgradient erwartet. Dies wird während eines einstellbaren Zeitintervalles überwacht, wobei Systemluftentnahmen soweit sie über den CAN-Bus angezeigt werden, zum Beispiel von der Luftfederung oder der Bremse, berücksichtigt werden. Fällt die Überprüfung positiv aus, so wird das Kupplungsschaltventil 70 belüftet und der Status des Kupplungsschaltventils 70 wird anderen Steuergeräten, beispielsweise über den CAN-Bus, mitgeteilt.

Ein Verfahren für die normale Kupplungsschließfunktion umfasst folgende Eingangsgrößen:
- L, der Motor 10 läuft;
- K, die Zündung ist eingeschaltet;
- M, kein Backup- oder Fehlerbetrieb;
- O, Einschaltdruck gemessen durch Drucksensoren der Druckluftversorgungseinrichtung, ist erreicht bzw. es wird über den CAN-Bus ein anstehender Luftbedarf angemeldet;
- L, Motorstartentlastung ist nicht aktiv (Anlassvorgang);
- O, Zwischenregeneration ist nicht aktiv (Status der Ventile 170, 172).

Falls der Einschaltdruck erreicht ist und die weiteren geforderten Bedingungen erfüllt sind, schließt die Kupplung und das System beginnt zu fördern. Hierzu wird das Kupplungsschaltventil 70 entlüftet und das Magnetventil 170 und das Ablassventil 270 geschlossen. Darüber hinaus wird der Kupplungsstatus angezeigt. Die beschriebene normale Schließ- bzw. Öffnungsfunktion des Kupplungssystems ermöglicht den sicheren Betrieb eines solchen spielfreien Kupplungssystems mit erhöhter Schlatwechselzahl.

Ein Verfahren zur Kompensierung eines erhöhten Druckverlustes oder Luftverbrauches umfasst folgende Eingangsgrößen:
- Ein großer Luftverbrauch wird über den CAN-Bus angekündigt oder der Druckgradient der Drucksensoren 320, 322, 324 zeigt einen großen Luftverbrauch;
- M, kein Systemfehler erkannt;
- L, der Motor 10 läuft;
- D, das Fahrzeug steht;
- I, J, der Triebstrang ist unterbrochen;
- O, von den Drucksensoren 320, 322, 324 wird ein zu geringer Druckanstieg über ein einstellbares Zeitintervall gemessen.

Die Systemdaten deuten zum Beispiel auf einen Container-Wechsel-Betrieb des Fahrzeugs oder einen Betonmischerreinigungsbetrieb hin. Um den gestiegenen Luftverbrauch kompensieren zu können, wird das Steuergerät 130 eine Erhöhung der Drehzahl des Motors 10 veranlassen. Falls die Trockenmittelsättigungsgrenze erreicht ist, kann falls erforderlich eine Zwischenregeneration eingleitet werden.

Ein Verfahren zur Verschleißreduzierung der Kupplungsbeläge umfasst als Eingangsgröße ein über ein einstellbares Zeitintervall erfasstes permanentes Ein- und Auskuppeln der Kupplung. Der hohe Reibverschleiß würde die Kupplungsbeläge bei andauernden Schaltvorgängen frühzeitig zerstören. Um dies zu vermeiden, wird das Steuergerät 130 den Kupplungsbetrieb über das Kupplungsschaltventil 70 abschalten, d. h. das Kupplungsschaltventil 70 entlüften und die Kupplung dauerhaft schließen, und die Steuerung des Systemdruckes über das Ablassventil 270 vornehmen. Durch diese Maßnahme wird die Anzahl der Schaltvorgänge des Kupplungssystems begrenzt und somit die Gesamtlebensdauer erhöht.

Ein Verfahren für den Notbetrieb beim Klemmen des Ausrückkolbens 40 der Kupplung umfasst folgende Eingangsgrößen:
- Das Kupplungsschaltventil 70 ist belüftet;
- O, es wird ein ausreichender Betriebsdruck zum Schalten des Kupplungsschaltventils 70 und der Kupplung von Drucksensoren der Druckluftversorgungseinrichtung gemessen;
- O, es ist kein Kreisdefekt vorhanden;
- M, es ist kein Hardwaredefekt in dem Steuergerät 130 gespeichert;
- O, der Systemdruckverlauf zeigt dass die Druckluftförderung nicht unterbrochen werden kann, da die Kupplung nicht ausrückt.

Das Kupplungsschaltventil 70 wird zunächst mehrfach angesteuert, um sicherzustellen, dass der Ausrückkolben 40 klemmt. Ist dies der Fall, wird das Kupplungsschaltventil 70 deaktiviert, d. h. entlüftet und die Kupplung dauerhaft geschlossen, und Druckregelung des Systemdrucks über das Ablassventil 270 vorgenommen. Weiterhin wird eine Waminformation, zum Beispiel durch eine Warnlampe, ausgegeben und Sonderfunktionen der Kupplung, zum Beispiel eine aktive Schubphasenregelung, abgeschaltet.

Ein Verfahren für einen Notbetrieb bei Leckage des Arbeitsvolumens 60 des Ausrückkolbens 40 umfasst die folgenden Eingangsgrößen:
- Das Kupplungsschaltventil 70 ist entlüftet;
- O, der von den Drucksensoren 320, 322 und 324 gemessene Systemdruck zählt weiter ab (bei Hochdrucksystemen ist der Druck des Sensors 320 maßgeblich);
- die Kupplung wechselt ständig zwischen offen und geschlossen.

Das Kupplungsschaltventil 70 wird bei Detektion eines Leitungsbruches oder einer Dichtungsleckage zwischen Kupplungsschaltventil 70 und Kupplung abgeschaltet, d. h. entlüftet und die Kupplung dauerhaft geschlossen. Zur Detektion nimmt das Steuergerät 130 die Drucksensoren 320, 322, 324 zur Hilfe, wobei das Kupplungsschaltventil 70 mehrfach geschaltet wird, um sicherzustellen, dass der Fehler an der Verbindung zwischen dem Kupplungsschaltventil 70 und dem Arbeitsvolumen 60 beziehungsweise einer Leckage des Arbeitsvolumens 60 selbst liegt. Durch die Leckage erhöht sich die Lastwechselanzahl zwischen Fördern und nicht Fördern und die Kupplung wird auf Dauer zerstört. Vergleiche hierzu den Fehlerbetrieb bei erhöhter Leckage. Bei zu großer Leckage trennt die Kupplung nicht mehr, das Kupplungsschaltventil 70 wird abgeschaltet, d. h. entlüftet und die Kupplung dauerhaft geschlossen, und der Druck über einen Druckregler beziehungsweise das Ablassventil 270 geregelt. Weiterhin wird eine Waminformation, zum Beispiel durch eine Warnlampe, ausgegeben und Sonderfunktionen, zum Beispiel eine aktive Schubphasenregelung, abgeschaltet.

Ein Verfahren für die Schlupfüberwachung mit zusätzlichem Drehzahlsensor umfasst die folgenden Eingangsdaten:
- L, Motordrehzahl;
- die mit einem Sensor gemessene Kompressordrehzahl;
- M, kein Kreisdefekt vorhanden und kein Hardwaredefekt gespeichert;
- O, der Vorratsdruck für die Schaltventilversorgung liegt über 8 Bar;

Die Motordrehzahl und die Kompressordrehzahl werden verglichen. Falls beide Größen im geschlossenen Zustand der Kupplung voneinander abweichen wird der Abschaltdruck stufenweise reduziert, bis kein merklicher Schlupf in der Kupplung mehr auftritt, das heißt die Motordrehzahl mit der Kompressordrehzahl übereinstimmt. Weiterhin wird eine Waminformation ausgegeben, zum Beispiel durch eine Warnlampe. Die Absenkung des Kompressorabschaltdruckniveaus kann falls erforderlich bis auf Hilfsbremsdruckniveau geschehen. Ohne diese Funktion müsste die Kupplung permanent getrennt werden, um eine Zerstörung der Kupplung zu verhindern, was zur Folge hätte, dass keine Nachförderung mehr vorhanden wäre und nur noch die in den Vorratsbehältern gespeicherte Druckluft zur Verfügung stände. Das Fahrzeug müsste dann, in Folge stark reduzierter Bremswirkung durch Druckmangel, aus dem Verkehr gezogen beziehungsweise sichergestellt werden.

Ein Verfahren für einen Werkstattbetrieb umfasst die folgenden Eingangsgrößen:
- B, das Fahrzeug steht;
- K, die Zündung ist eingeschaltet;
- M, N, ein Servicebetrieb wird durch Onboard- oder Offboarddiagnose angezeigt;
- Kompressor ist in Leerlaufphase (belüftete Kupplung);

Sind diese Eingangsbedingungen erfüllt, so wird das Kupplungsschaltventil 70 abgeschaltet und die Förderleitung 260 entlüftet. Diese Maßnahme wird durchgeführt, um bei Montage am Kompressor die Verletzungsgefahr zu reduzieren. Dies kann zum Beispiel beim Wechseln einer verschlissenen Kupplungsscheibe 242 erforderlich sein. Weiterhin kann der Werkstattbetrieb genutzt werden, um zu überprüfen ob der Ausrückkolben noch spielfrei Arbeitet.
Ein Verfahren für einen Winterbetrieb mit einer Einfrierschutzfunktion umfasst die folgenden Eingangsgrößen:
- O, Aktueller Förderstatus;
- O, Status TCO-Ventil 362;
- A, Außentemperatur über CAN-Bus;
- O, Lufttrocknertemperatur über Temperatursensor 140;
- O, Verlauf der Einschaltdauer des Kompressors über ein Zeitfenster;
- L, Temperatur des Verbrennungsmotors;
- C, Lastkollektiv des Verbrennungsmotors in einem Zeitfenster;
- O, Kompressordruck;
- O, optional die Temperatur eines Druckstutzens an der Förderleitung 260, falls dort ein Sensor vorhanden ist;
- B, Fahrzeuggeschwindigkeit.

Bei tiefen Temperaturen wird der Kompressor während der Abschaltphase zur Zwischenförderung eingeschaltet, um ein Vereisen der Versorgungsleitung 260 zu verhindern. Bei gleichzeitiger Öffnung des Ablassventils 270 steigt dabei der Systemdruck nicht. Es ist auch möglich, ein weiteres Abschaltdruckniveau für diesen Zustand zu parametrisieren, das Ablassventil 270 bleibt dann geschlossen. Das System ermittelt eine mittlere Temperatur aus den gemessenen Temperaturen der Wärmequellen, die Einfluss auf die Temperatur der Förderleitung 260 haben können. Das System lernt den Verlauf des Zusammenhanges zwischen der Einschaltdauer des Verbrennungsmotors und der Einschaltdauer des Kompressors sowie der Außentemperatur und vergleicht die daraus ermittelte Größe mit der gemessenen internen Temperatur des Lufttrockners, die durch den Temperatursensor 140 gemessen wird, welcher weiterhin für die Regelung einer nicht dargestellten Heizung verantwortlich ist. Wird festgestellt, dass die Gefahr des Einfrierens der Förderleitung 260 besteht, so wird zunächst ein eventuell vorhandenes TCO-Ventil 362 zusammen mit dem Ablassventil 270 geöffnet, um eventuell in der Förderleitung vorhandenes Wasser 260 auszublasen. Im weiteren Verlauf wird das Ablassventil 270 zyklisch zum Spülen der Förderleitung 260 geöffnet. Optional kann während des Ausblasens zusätzlich noch durch den Kompressor 200 Druckluft gefördert werden, um nicht nur die in der Förderleitung 260 gespeicherte Druckluft zum Spülen zu verwenden. Wurde das Fahrzeug abgestellt und der Motor abgeschaltet, so wird die Nachlaufregeneration für die Einfrierschutzfunktion mitbewertet. Dabei wird die Zeitdauer des Abstellens mit einbezogen. Dadurch, dass die Förderleitung unter Druck steht, fällt mehr Wasser bei TCO-Betrieb während der Leerlaufphase aus.

Ein Verfahren für die Maximaldrucküberwachung und den Backupbetrieb über das Ablassventil 270 umfasst die folgenden Eingangsgrößen:
- M, Gespeicherter Fehlerstatus des Systems;
- O, gemessener Maximaldruck überschritten;
- O, Status des Kupplungsschaltventils.

Kann aufgrund der erhaltenen Eingangsgrößen darauf geschlossen werden, dass die Kupplung aufgrund mechanischen Klemmens des Ausrückkolbens 40 oder pneumatischer Fehler nicht öffnen kann, so übernimmt das Ablassventil 270 die Druckregelung des Systems.

Ein Verfahren für den Fehlerbetrieb bei erhöhter Systemleckage umfasst die Einschaltdauer des Kompressors als Eingangsgröße.

Eine Leckage in einem der Kreise bewirkt ein permanentes Öffnen und Schlie-ßen der Kupplung, welches die Kupplung auf Dauer zerstören würde. Durch Verändern der Schaltspanne zwischen dem Öffnen und Schließen der Kupplung und der damit verbundenen Zyklusveränderung wird dies entschärft. Weiterhin wird eine Waminformation, zum Beispiel durch eine Warnlampe, ausgegeben.

Ein Verfahren für einen optimierten Regenerationsbetrieb mit der Kupplung umfasst die folgenden Eingangsgrößen:
- O, der Wassergehalt des Trockenmittels;
- O, der durch den Systemdrucksensor 320 gemessene Systemdruck;
- O, der Laufzeitkorrekturfaktor;
- O, der Umgebungstemperaturfaktor.

Der Laufzeitkorrekturfaktor ist, abhängig von der noch verbliebenen Standzeit des Trockenmittels, parametrisierbar und er ist von der insgesamt absolut gefilterten und getrockneten Luftmenge abhängig. Die gelieferte Luftmenge ist über den Kompressor 200 bestimmbar, wobei das Volumen der Förderleitung 260 abgezogen wird, da die Luft in der Förderleitung 260 noch nicht getrocknet wurde. Ziel des optimierten Regenerationsbetriebes ist eine zusätzliche Energieeinsparung und gleichzeitig eine Vermeidung unnötiger Lastwechsel des Kupplungssystems zur Verlängerung der Gesamtlebensdauer. Die Kupplung wird dabei immer getrennt, wenn der Abschaltdruck erreicht ist. Das Ablassventil 270 wird jedoch nur geöffnet, wenn eine Regeneration der Filterpatrone 280 unbedingt erforderlich ist. Insbesondere wird das Ablassventil also nicht in jeder Leerlaufphase geöffnet, wodurch Schaltverluste reduziert werden. Das Ablassventil 270 und das Kupplungsschaltventil 70 werden also asynchron geschaltet.

Um zu bestimmen, ob eine Regeneration erforderlich ist, kann das Steuergerät 130 aus der geförderten Luftmenge den Feuchtegehalt des Trocknungsmittels und die erforderliche Regenerationsluftmenge in Abhängigkeit von der Temperatur berechnen. Ist der Feuchtegehalt des Trocknungsmittels zu groß wird die Regeneration eingeleitet.

Ein Verfahren für einen Energiesparbetrieb mit Kupplungsbetrieb und passiver Schubphasenregelung mit oder ohne TCO-Ventil umfasst einen ersten Satz von Eingangsgrößen zur Berechnung der Schutzphasen:
- J, Motordrehmoment; E, Status Motorbremse; I, J, Getriebekupplungsstatus; L, Motordrehzahl und B, Fahrzeuggeschwindigkeit.

Mit diesen Eingangsgrößen werden die Schubphasen berechnet, wobei ein typischer programmierbarer Zeitfilter üblicherweise zwei Sekunden beträgt. Weitere Eingangsgrößen für das Verfahren sind:
- O, System in Förderphase;
- O, normaler Abschaltdruck noch nicht erreicht;
- O, Regenerationsbetrieb nicht aktiv;
- eventuell über CAN-Bus angezeigter zusätzlicher Luftbedarf.

Um Energie einzusparen, wird der Abschaltdruck des Systems und damit die Zeitspanne bis zum Öffnen der Kupplung sowie die gespeicherte Luftmenge bis zum einstellbaren maximal zulässigen Schubphasensystemdruck erhöht. Zu diesem Zweck wird das eventuell vorhanden TCO-Ventil 362 offen gehalten und das Ablassventil 270 bleibt geschlossen.

Ein Verfahren für einen Energiesparbetrieb mit aktiver Schubphasenregelung mit TCO-Ventil umfasst wiederum die bei dem vorangegangen Verfahren genannten Eingangsgrößen zur Berechnung der Schubphasen sowie:
- O, System ist in Leerlaufphase;
- O, Systemdruck erreicht eine einstellbare Druckschwelle zwischen Einschaltdruck und Abschaltdruck;
- eventuell zusätzlicher Luftbedarf wird über den CAN-Bus angekündigt;
- O, Regenerationsbetrieb ist nicht aktiv.

Sind die Eingangsbedingungen erfüllt, so wird das System in eine Förderphase geschaltet, wobei das TCO-Ventil 362 geöffnet und die Kupplung geschlossen wird. Im Falle langer Schubphasen kann, zum Beispiel durch GPS-Höhendatenauswertung, eine Anhebung des Abschalt- beziehungsweise Systemdruckes erfolgen. Das Öffnen der Kupplung erfolgt wieder wenn der einstellbare maximalzulässige Schubphasenabschaltdruck erreicht ist.

Der Hauptunterschied der aktiven Schubphasenregelung zu einer passiven Schubphasenregelung besteht darin, dass das System im bereits vorhandenen Fördermodus auf ein höheres Druckniveau fördert und nicht zusätzlich in den Fördermodus schaltet, wenn Luftbedarf angezeigt wird und das Fahrzeug in einer Motorbremsphase ist.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Motor
- 20: Eingangsdrehzahlsensor
- 22: elektrische Leitung
- 30: Kupplungsgehäuse
- 32: Gehäuseanschlag
- 34: Führung
- 40: Ausrückkolben
- 50: Kompensationsfeder
- 60: Arbeitsvolumen
- 70: Kupplungsschaltventil
- 80: elektrische Leitung
- 90: elektrische Leitung
- 100: Motorsteuergerät
- 110: serielle Leitung
- 120: pneumatische Leitung
- 130: Steuergerät
- 140: Temperatursensor
- 150: Datenbus
- 160: Datenfilter
- 170: Magnetventil
- 172: Ablassmagnetventil
- 180: Ausgangsdrehzahlsensor
- 190: elektrische Leitung
- 200: Kompressor
- 210: Kupplungsfeder
- 220: Ausrücklager
- 230: Abtriebswelle
- 232: Antriebswelle
- 240: Druckplatte
- 242: Kupplungsscheibe
- 250: Ausrückmechanik
- 252: Kupplungsdeckel
- 260: Förderleitung
- 270: Ablassventil
- 272: Feder
- 274: Vorsteuerleitung
- 280: Lufttrocknerpatrone
- 290: Rückschlagventil
- 300: Steuerleitung
- 310: Rückschlagventil
- 312: Drossel
- 320: Drucksensor
- 322: Drucksensor
- 324: Drucksensor
- 326: Drucksensoranschlussleitungen
- 330: Überströmventil
- 332: Überströmventil
- 334: Überströmventil
- 336: Überströmventil
- 338: Überströmventil
- 340: Überströmventil
- 342: Überströmventil
- 344: Überströmventil
- 350: Vorratsbehälter
- 352: Vorratsbehälter
- 360: Anschluss Luftfederung
- 362: TCO-Ventil
- 364: Vorsteuerleitung
- 366: Feder
- 368: Steuerleitung Druckbegrenzungs- und Ablassventil
- 370: Magnetventil
- 372: Boosterventil
- 374: ESS Steuerleitung
- 390: Rückschlagventil
- 392: Rückschlagventil

## Patentansprüche

1. Kupplungsystem für einen Kompressor (200) einer Druckluftaufbereitungsanlage, wobei das Kupplungssystem folgendes aufweist:
- ein Kupplungsgehäuse (30),
- eine Kupplungsscheibe (242) zum Übertragen eines Drehmomentes einer Antriebsseite auf eine Druckplatte (240) einer Abtriebsseite,
- einen Ausrückkolben (40) zum pneumatischen Ausrücken der Kupplung,
- eine Kupplungsfeder (210) zum Anpressen der Kupplungsscheibe (242) an die Druckplatte (240),
- ein elektrisch betätigbares Kupplungsschaltventil (70) zum Belüften eines dem Ausrückkolben (40) zugeordneten Arbeitsvolumens (60),
- ein elektronisches Steuergerät (100) zur Steuerung der Kupplung in Abhängigkeit von verschiedenen Systemparametem und
- ein Ausrücklager (220) zur Lagerung einer Antriebswelle (232) und zur Übertragung der von dem Ausrückkolben (40) auf die Kupplungsscheibe (242) in axialer Richtung ausgeübten Kraft,
**dadurch gekennzeichnet, dass** die Kupplungsfeder (210) das Ausrücklager (220) im eingerückten Zustand der Kupplung gegen einen gehäuseseitigen Anschlag (32) drückt und so ein Ausrücklagerspiel verhindert.

2. Kupplungssystem für einen Kompressor (200) einer Druckluftaufbereitungsanlage, wobei das Kupplungssystem folgendes aufweist:
- ein Kupplungsgehäuse (30),
- eine Kupplungsscheibe (242) zum Übertragen eines Drehmomentes einer Antriebsseite auf eine Druckplatte (240) einer Abtriebsseite,
- einen Ausrückkolben (40) zum pneumatischen Ausrücken der Kupplung,
- eine Kupplungsfeder (210) zum Anpressen der Kupplungsscheibe (242) an die Druckplatte (240),
- ein elektrisch betätigbares Kupplungsschaltventil (70) zum Belüften eines dem Ausrückkolben (40) zugeordneten Arbeitsvolumens (60),
- ein elektronisches Steuergerät (100) zur Steuerung der Kupplung in Abhängigkeit von verschiedenen Systemparametem und
- ein Ausrücklager (220) zur Lagerung einer Antriebswelle (232) und zur Übertragung der von dem Ausrückkolben (40) auf die Kupplungsscheibe (242) in axialer Richtung ausgeübten Kraft,
**dadurch gekennzeichnet, dass** mindestens eine Kompensationsfeder (50) vorgesehen ist, die im eingerückten Zustand der Kupplung ein Anschlagen des Ausrücklagers (220) am Kupplungsgehäuse (30) verhindert.

3. Kupplungssystem gemäß Anspruch 1 oder 2, **dadurch gekennzeichnet, dass** im Bereich zwischen Gehäuseanschlag (32) und Ausrücklager (220) eine aus mindestens einer Nase und mindestens einer entsprechenden Ausnehmung bestehende Führung (34) angeordnet ist, die eine Drehung des Ausrückkolbens (40) um die Antriebsachse (232) verhindert, wobei die mindestens eine Nase im ein- und im ausgerückten Zustand zumindest teilweise in der Ausnehmung verbleibt.

4. Kupplungssystem gemäß einem der vorhergehenden Ansprüche, **dadurch gekennzeichnet, dass** das Kupplungsschaltventil (70) redundant von zwei unabhängigen Vorratsbehältem (350, 352) der Betriebsbremskreise versorgt wird.

5. Kupplungssystem gemäß einem der vorhergehenden Ansprüche, **dadurch gekennzeichnet, dass** der zum Öffnen oder Schließen der Kupplung geforderte Systemdruck mit einem einem Überströmventil (338, 330, 332) nachgeordneten Drucksensor (320, 322, 324) gemessen wird.

6. Kupplungssystem gemäß einem der vorhergehenden Ansprüche, **dadurch gekennzeichnet, dass** das Steuergerät (130) eine Umgebungstemperatur mit einem Temperatursensor (140) misst oder eine Umgebungstemperatur an das Steuergerät (130) übertragen wird.

7. Nutzfahrzeug mit einer Druckluftversorgungseinrichtung, die einen Energiespar- und Kupplungsüberwachungsbetrieb ermöglicht, einem Kompressor (200) und einem Kupplungssystem gemäß einem der vorhergehenden Ansprüche.

8. Verfahren zur Steuerung eines Kupplungssystems für einen Kompressor (200) einer Druckluftaufbereitungsanlage, wobei das Kupplungssystem folgendes aufweist:
- ein Kupplungsgehäuse (30),
- eine Kupplungsscheibe (242) zum Übertragen eines Drehmomentes einer Antriebsseite auf eine Druckplatte (240) einer Abtriebsseite,
- einen Ausrückkolben (40) zum pneumatischen Ausrücken der Kupplung,
- eine Kupplungsfeder (210) zum Anpressen der Kupplungsscheibe (242) an die Druckplatte (240),
- ein elektrisch betätigbares Kupplungsschaltventil (70) zum Belüften eines dem Ausrückkolben (40) zugeordneten Arbeitsvolumens (60),
- ein elektronisches Steuergerät (100) zur Steuerung der Kupplung in Abhängigkeit von verschiedenen Systemparametem und
- ein Ausrücklager (220) zur Lagerung einer Antriebswelle (232) und zur Übertragung der von dem Ausrückkolben (40) auf die Kupplungsscheibe (242) in axialer Richtung ausgeübten Kraft,
**dadurch gekennzeichnet,**
- **dass** die Kupplungsfeder (210) das Ausrücklager (220) im eingerückten Zustand der Kupplung gegen einen gehäuseseitigen Anschlag (32) drückt und so ein Ausrücklagerspiel verhindert oder mindestens eine Kompensationsfeder (50) vorgesehen ist, die im eingerückten Zustand der Kupplung ein Anschlagen des Ausrücklagers (220) am Kupplungsgehäuse (30) verhindert und
- **dass** das elektronische Steuergerät (100) das elektrisch betätigbare Kupplungsschaltventil (70) schaltet, wodurch die Kupplung verschleißarm öffnet oder schließt, und den Status der Kupplung anderen Steuergeräten mitteilt, wobei mindestens einer der folgenden Systemparameter berücksichtigt ist:
A: Umgebungstemperatur
B: Fahrzeuggeschwindigkeit
C: Motordrehmoment
D: GPS-/Satellitendaten
E: Motor-/Retarderstatus
F: Gaspedalstatus
G: Verbraucherstatus
H: Bremsen-/Niveauregelungsinfo
I: Getriebestatus
J: Fahrzeugkupplungsstatus
K: Status der Zündung
L: Motorstatus/Drehzahlnachfrage.
M: Onboardingdiagnosedaten
N: Offboardingdiagnosedaten
O: Statusluftversorgungssystem

## Claims

1. Coupling system for a compressor (200) of a compressed air treatment assembly, wherein the coupling system comprises the following:
- a coupling housing (30),
- a coupling plate (242) for transferring a torque of a drive side to a pressure plate (240) of an output side,
- a release piston (40) for pneumatic release of the coupling,
- a coupling spring (210) for pressing the coupling plate (242) against the pressure plate (240),
- an electrically actuatable coupling switching valve (70) for ventilating a work volume (60) assigned to the release piston (40),
- an electronic control unit (100) for controlling the coupling in dependence upon different system parameters and
- a release bearing (220) for supporting a drive shaft (232) and for transferring the force exerted by the release piston (40) to the coupling plate (242) in an axial direction,
**characterised in that** the coupling spring (210) presses the release bearing (220), in the engaged state of the coupling, against a housing-side stop (32) and thus prevents a release bearing clearance.

2. Coupling system for a compressor (200) of a compressed air treatment assembly, wherein the coupling system comprises the following:
- a coupling housing (30),
- a coupling plate (242) for transferring a torque of a drive side to a pressure plate (240) of an output side,
- a release piston (40) for pneumatic release of the coupling,
- a coupling spring (210) for pressing the coupling plate (242) against the pressure plate (240);
- an electrically actuatable coupling switching valve (70) for ventilating a work volume (60) assigned to the release piston (40),
- an electronic control unit (100) for controlling the coupling in dependence upon different system parameters and
- a release bearing (220) for supporting a drive shaft (232) and for transferring the force exerted by the release piston (40) to the coupling plate (242) in an axial direction,
**characterised in that** at least one compensating spring (50) is provided which, in the engaged state of the coupling, prevents the release bearing (220) from stopping against the coupling housing (30).

3. Coupling system according to claim 1 or 2, **characterised in that** a guide (34) comprising at least one projection and at least one corresponding recess is arranged in the region between the housing stop (32) and release bearing (220) and prevents a rotation of the release piston (40) around the drive axle (232), wherein the at least one projection remains at least partially in the recess in the engaged and released states.

4. Coupling system according to one of the preceding claims, **characterised in that** the coupling switching valve (70) is supplied redundantly by two independent supply containers (350, 352) of the service brake circuits.

5. Coupling system according to one of the preceding claims, **characterised in that** the system pressure required to open or close the coupling is measured with a pressure sensor (320, 322, 324) arranged downstream of an overflow valve (338, 330, 332).

6. Coupling system according to one of the preceding claims, **characterised in that** the control unit (130) measures an ambient temperature with a temperature sensor (140) or an ambient temperature is transmitted to the control unit (130).

7. Utility vehicle having a compressed air supply device which facilitates energy saving and coupling monitoring operation, a compressor (200) and a coupling system according to one of the preceding claims.

8. Method for controlling a coupling system for a compressor (200) of a compressed air preparation assembly, wherein the coupling system comprises the following:
- a coupling housing (30),
- a coupling plate (242) for transferring a torque of a drive side to a pressure plate (240) of an output side,
- a release piston (40) for pneumatic release of the coupling,
- a coupling spring (210) for pressing the coupling plate (242) against the pressure plate (240),
- an electrically actuated coupling switching valve (70) for ventilating a work volume (60) assigned to the release piston (40),
- an electronic control unit (100) for controlling the coupling in dependence upon different system parameters and
- a release bearing (220) for supporting a drive shaft (232) and for transferring the force exerted by the release piston (40) on the coupling plate (242) in an axial direction,
**characterised in that**
- the coupling spring (210) presses the release bearing (220), in the engaged state of the coupling, against a housing-side stop (32) and thus prevents a release bearing clearance or at least one compensating spring (50) is provided which, in the engaged state of the coupling, prevents the release bearing (220) from stopping against the coupling housing (30) and
- the electronic control unit (100) switches the electrically actuatable coupling switching valve (70), wherein the coupling opens or closes with limited wear, and notifies the status of the coupling to other control units, wherein at least one of the following system parameters is considered:
A: Ambient temperature
B: Vehicle speed
C: Engine torque
D: GPS/satellite data
E: Engine / retarder status
F: Accelerator status
G: Consumer status
H: Brake / level control info
I: Transmission status
J: Vehicle coupling status
K: Ignition status
L: Engine status / rotational speed demand
M: On-board diagnosis data
N: Off-board diagnosis data
O: Status air supply system

## Revendications

1. Système d'accouplement pour un compresseur (200) d'un dispositif de préparation d'air comprimé, le système d'accouplement ayant ce qui suit :
- un carter (30) d'accouplement,
- un disque (242) d'accouplement pour la transmission d'un couple de rotation d'un côté d'entrée à un plateau (240) de pression d'un côté de sortie,
- un piston (40) de désaccouplement pour le désaccouplement pneumatique de l'accouplement,
- un ressort (210) d'accouplement pour appliquer le disque (242) d'accouplement au plateau (240) de pression,
- une vanne (70) pilote d'accouplement, pouvant être actionnée électriquement pour alimenter en air un volume (60) de travail associé au piston (40) de désaccouplement,
- un appareil (100) électronique de commande pour la commande de l'accouplement en fonction de divers paramètres de système et
- un palier (220) de désaccouplement pour le montage d'un arbre (232) d'entraînement et pour la transmission de la force appliquée dans la direction axiale par le piston (40) de désaccouplement au disque (242) d'accouplement,
**caractérisé en ce que** le ressort (210) d'accouplement repousse le palier (220) de désaccouplement dans l'état accouplé de l'accouplement sur une butée (32) du côté du carter et empêche ainsi un jeu du palier de désaccouplement.

2. Système d'accouplement pour un compresseur (200) d'un dispositif de traitement d'air comprimé, dans lequel le système d'accouplement a ce qui suit :
- un carter (30) d'accouplement,
- un disque (242) d'accouplement pour la transmission d'un couple de rotation d'un côté d'entrée à un plateau (240) de pression d'un côté de sortie,
- un piston (40) de désaccouplement pour le désaccouplement pneumatique de l'accouplement,
- un ressort (210) d'accouplement pour appliquer le disque (242) d'accouplement au plateau (240) de pression,
- une vanne (70) pilote d'accouplement, pouvant être actionnée électriquement pour alimenter en air un volume (60) de travail associé au piston (40) de désaccouplement,
- un appareil (100) électronique de commande pour la commande de l'accouplement en fonction de divers paramètres de système et
- un palier (220) de désaccouplement pour le montage d'un arbre (232) d'entraînement et pour la transmission de la force appliquée dans la direction axiale par le piston (40) de désaccouplement au disque (242) d'accouplement,
**caractérisé en ce qu'**il set prévu au moins un ressort (50) de compensation, qui empêche dans l'état accouplé de l'accouplement une venue en butée du palier (220) de désaccouplement sur le carter (30) de l'accouplement.

3. Système d'accouplement suivant la revendication 1 ou 2, **caractérisé en ce qu'**il est monté dans la zone comprise entre la butée (32) du carter et le palier (220) de désaccouplement un guidage (34) consistant en au moins un bec et en au moins un évidement correspondant, guidage qui empêche une rotation du piston (40) de désaccouplement autour de l'axe (232) d'entraînement, le au moins un bec restant, au moins en partie, dans l'évidement, dans l'état accouplé et dans l'état désaccouplé.

4. Système d'accouplement suivant l'une des revendications précédentes, **caractérisé en ce que** la vanne (70) pilote d'accouplement est alimentée d'une manière redondante par deux réservoirs (350, 352) indépendants du circuit de frein de service.

5. Système d'accouplement suivant l'une des revendications précédentes, **caractérisé en ce que** la pression du système exigée pour l'ouverture et la fermeture de l'accouplement est mesurée par un capteur (320, 322, 324) de pression monté en aval d'une soupape (338, 330, 332) de décharge.

6. Système d'accouplement suivant l'une des revendications précédentes, **caractérisé en ce que** l'appareil (130) de commande mesure une température ambiante par un capteur (140) de température ou transmet une température ambiante à l'appareil (130) de commande.

7. Véhicule utilitaire ayant un dispositif d'alimentation en air comprimé, qui rend possible un fonctionnement économe en énergie et de contrôle d'accouplement, comprenant un compresseur (200) et un système d'accouplement suivant l'une des revendications précédentes.

8. Procédé de commande d'un système d'accouplement pour un compresseur (200) d'une installation de préparation d'air comprimé, le système d'accouplement ayant ce qui suit :
- un carter (30) d'accouplement,
- un disque (242) d'accouplement pour la transmission d'un couple de rotation d'un côté d'entrée à un plateau (240) de pression d'un côté de sortie,
- un piston (40) de désaccouplement pour le désaccouplement pneumatique de l'accouplement,
- un ressort (210) d'accouplement pour appliquer le disque (242) d'accouplement au plateau (240) de pression,
- une vanne (70) pilote d'accouplement, pouvant être actionnée électriquement pour alimenter en air un volume (60) de travail associé au piston (40) de désaccouplement,
- un appareil (100) électronique de commande pour la commande de l'accouplement en fonction de divers paramètres de système et
- un palier (220) de désaccouplement pour le montage d'un arbre (232) d'entraînement et pour la transmission de la force appliquée dans la direction axiale par le piston (40) de désaccouplement au disque (242) d'accouplement, **caractérisé**
- **en ce que** le ressort (210) d'accouplement repousse le palier (220) de désaccouplement à l'état accouplé de l'accouplement sur une butée (32) du côté du carter et empêche ainsi un jeu du palier de désaccouplement ou il est prévu au moins un ressort (50) de compensation, qui à l'état désaccouplé de l'accouplement, empêche le palier (220) de désaccouplement de venir en butée sur le carter (30) d'accouplement et
- **en ce que** l'appareil (100) électronique de commande déclenche la vanne (70) pilote d'accouplement pouvant être actionnée électriquement, de sorte que l'accouplement s'ouvre ou se ferme avec peu d'usure et fait part à d'autres paramètres de commande de l'état de l'accouplement, au moins l'un des paramètres de système suivants étant pris en compte :
A : température ambiante
B : vitesse du véhicule
C : couple de rotation du moteur
D : données GPS/satellite
E : état du moteur/ralentisseur
F : état de la pédale des gaz
G : état d'un consommateur
H : info de fin/régulation de niveau
I : état de la transmission
J : état de l'embrayage du véhicule
K : état de l'allumage
L : état du moteur/demande de régime
M : données de diagnostic à bord
N : données de diagnostic hors bord
O : état du système d'alimentation en air.
